# EUROPEAN PATENT APPLICATION

(11) **EP 2 178 256 A1**
(43) Date of publication of application: **21.04.2010**
(21) Application number: 08783983.3
(22) Date of filing: 14.08.2008
(51) Int. Cl.: H04L 12/58

(54) **METHOD AND TERMINAL FOR REALIZING INFORMATION SHARING IN NETWORK TV SERVICE SYSTEM**

(30) Priority: 04.02.2008 CN 200810057692
(71) Applicant: Huawei Technologies Co., Ltd., Longgang District Shenzhen Guangdong 518129 (CN)
(72) Inventor: LIU, Jian, Longgang District Shenzhen 518129 (CN); MA, Hanjun, Longgang District Shenzhen 518129 (CN)
(74) Representative: Kreuz, Georg Maria
(86) International application number: PCT/CN2008/071992
(87) International publication number: WO 2009/097713

(57) **Abstract**

A method and a terminal for sharing information in an IPTV service system are disclosed herein. A method includes: generating a recommendation email which carries a mailbox identifier of the recommendation recipient and an index of the recommended contents; and sending the recommendation email according to the mailbox identifier. Another method includes: sending an email receiving request according to a preset recommendation receiving policy, and receiving an email; judging whether the received email is a recommendation email, and, if it is a recommendation email, resolving the recommendation email to obtain information about the recommended contents; and obtaining media stream data of the recommended contents according to the information about the recommended contents. The embodiments of the present invention implement the information sharing service without deploying any IM subsystem, thus reducing the cost.

## Description

### FIELD OF THE INVENTION

The present invention relates to broadband data and mobile communication, and in particular, to a method and a terminal for sharing information in an IPTV service system.

### BACKGROUND

In the IP Multimedia Subsystem (IMS)-based Internet Protocol Television (IPTV) system and Mobile Television (MTV) system, which are collectively known as IPTV service system, information sharing is very attractive. By virtual of the capabilities of the IMS network, a user in one system can add the user in the other system as a friend, and recommend programs to the opposite party and watch the programs recommended by the opposite party.

The existing information sharing system is an IMS-based IPTV system, which includes an instant messaging (IM) subsystem and an IPTV subsystem. The method for implementing an information sharing service based on the foregoing system includes the following steps:

The source terminal is started up, logs in to the IPTV subsystem and the IM subsystem simultaneously, and obtains the online information of the friend through the IM subsystem.

The source terminal obtains the watched IPTV program, and, if the user wants to recommend the program to his or her friend, the user selects the destination terminal from the friend list, and sends a recommendation request which carries a special identifier indicating that the message body carries an index of the recommended contents.

The destination terminal receives the recommendation request, and identifies the index of the recommended contents in the request, and displays the request to the destination terminal user in a mode different from the ordinary message mode.

The destination terminal obtains the media stream of the recommended contents so that the contents can be watched by the destination terminal user.

The conventional art is defective in the following aspects:

The deployment of the IMS-based IPTV system network is costly, the IMS-based information sharing service involves multiple subsystems of the IMS, and the service development is complex and involves deployment of an IM subsystem.

The system needs to log in to two subsystems simultaneously to communicate with the two subsystems in real time.

### SUMMARY

The present invention provides a method and a terminal for sharing information in an IPTV service system to implement the information sharing service without deploying any IM subsystem.

As a first aspect of the invention the method for sharing information in an IPTV service system includes:
generating a recommendation email which carries a mailbox identifier of the recommendation recipient and an index of the recommended contents; and
sending the recommendation email according to the mailbox identifier.

As a second aspect of the invention the method for sharing information in an IPTV service system includes:
sending an email receiving request according to a preset recommendation receiving policy, and receiving an email;
judging whether the received email is a recommendation email, and, if it is a recommendation email, resolving the recommendation email to obtain information about the recommended contents; and
obtaining media stream data of the recommended contents according to the information about the recommended contents.

As a third aspect of the invention the terminal for sharing information in an IPTV service system includes:
a first recommending module, adapted to: generate a recommendation email which carries a mailbox identifier of the selected recommendation recipient and an index of the recommended contents; and
a sending module, adapted to send the recommendation email according to the mailbox identifier.

As a fourth aspect of the invention the terminal for sharing information in an IPTV service system includes:
a second service module, adapted to: send an email receiving request according to a preset recommendation receiving policy, and obtain the media stream data of the recommended contents; and
a second recommending module, adapted to: forward the email receiving request, receive the email, judge whether the received email is a recommendation email, and, if it is a recommendation email, resolve the recommendation email to obtain information about the recommended contents, and send the information about the recommended contents to the second service module so that the second service module obtains the media stream data of the recommended contents according to the information about the recommended contents.

In the IPTV service of the present invention, the terminal generates and sends a recommendation email, judges whether the received email is recommendation email, and, if it is a recommendation email, resolves the recommendation email to obtain the information about recommended contents. Therefore, the information sharing service is implemented without deploying any IM subsystem, and the cost is reduced.

### BRIEF DESCRIPTION OF THE DRAWINGS

FIG. 1 is a flowchart of a method for sharing information in an IPTV service system in an embodiment of the present invention;
FIG. 2 is a flowchart of a method for sharing information in an IPTV service system in another embodiment of the present invention;
FIG. 3 is a flowchart of another method for sharing information in an IPTV service system in an embodiment of the present invention;
FIG. 4 is a flowchart of another method for sharing information in an IPTV service system in another embodiment of the present invention;
FIG. 5 is a structure of a terminal for sharing information in an IPTV service system in an embodiment of the present invention;
FIG. 6 is a structure of a terminal for sharing information in an IPTV service system in another embodiment of the present invention;
FIG. 7 is a structure of another terminal for sharing information in an IPTV service system in an embodiment of the present invention; and
FIG. 8 is a structure of another terminal for sharing information in an IPTV service system in another embodiment of the present invention.

### DETAILED DESCRIPTION

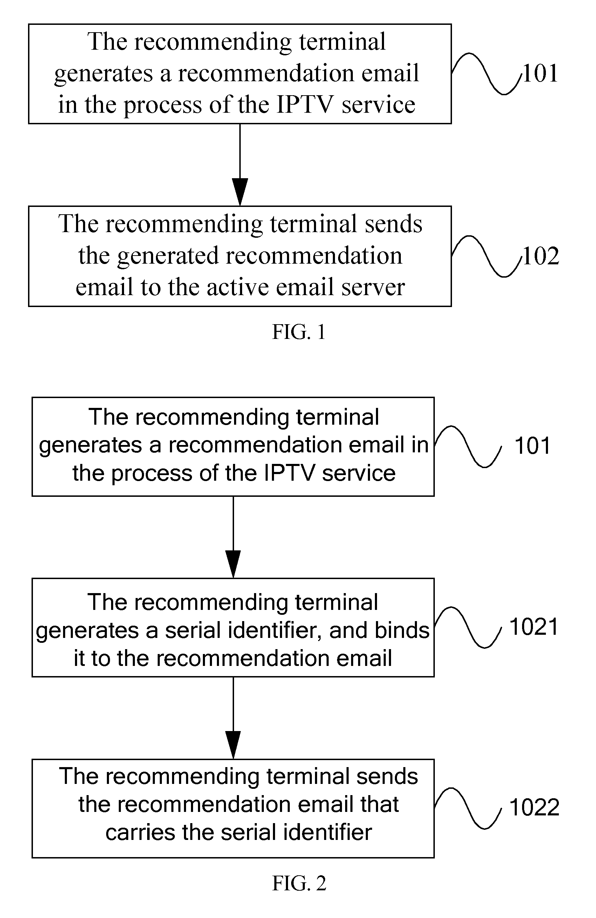

FIG. 1 is a flowchart of a method for sharing information in an IPTV service system in an embodiment of the present invention. The method in this embodiment includes the following steps:
Step 101: In the process of the IPTV service, the recommending terminal may trigger the information sharing service according to preset recommendation generating policy. Specifically, the information sharing service is triggered by the user of the recommending terminal, or the information sharing service is triggered automatically once the preset recommendation condition is fulfilled. The preset recommendation condition may be set for every recommendation recipient, or set for only a specific recommendation recipient. More particularly, a keyword is set according to the hobbies and occupation of the recommendation recipient. When the type or the name of the program received by the recommending terminal includes the keyword, the information sharing service is triggered. After the service is triggered, a recommendation email is generated. The recommendation email carries a mailbox identifier of the selected recommendation recipient and an index of the recommended contents, and may further carry the description about the recommended contents so that the recommendation recipient understands the recommended contents beforehand.

The recommending terminal stores a recommendation recipient information list. This list includes the IPTV user identifier, name and description of the recommendation recipient. The recommending terminal also stores the mapping relation between the ID of the recommendation recipient and the mailbox identifier information of the recommendation recipient. The mailbox identifier information includes an active mailbox identifier of the recommendation recipient. The active mailbox identifier of the recommendation recipient may be obtained through the ID of the recommendation recipient. In the process of the IPTV service, in the stored recommendation recipient information list, the recommending terminal selects one or more IDs of the recommendation recipients and the corresponding mailbox identifier information according to the preset recommendation generating policy (i.e. the information sharing service may be triggered by the user of the recommending terminal, or the information sharing service may be triggered automatically once the preset recommendation condition is fulfilled). According to the mailbox identifier information of the selected recommendation recipients and the index of the recommended contents, the recommending terminal generates a recommendation email (including a title and contents). The title and/or the contents of the recommendation email include a recommendation identifier which identifies the email as a recommendation email so that the recommendation recipient can identify the recommendation email.

Step 102: The recommending terminal sends the generated recommendation email according to the mailbox identifier.

The recommending terminal sends the recommendation email to the active email server of the recommending terminal on the network through a standard email transfer protocol according to the email server setting information. The email server setting information includes: identifier of the active email server, service port of the active email server, the account and password of the recommending terminal on the active email server, and mode of interaction between the recommending terminal and the active email server.

The mailbox identifier of the recommending terminal and the mailbox identifier of the recommendation receiving terminal may correspond to the same email server or different email servers. If the mailbox identifier of the recommending terminal and the mailbox identifier of the recommendation receiving terminal correspond to different email servers, the email server corresponding to the mailbox identifier of the recommending terminal needs to forward the recommendation email to the email server corresponding to the mailbox identifier of the recommendation receiving terminal. In this way, the recommendation receiving terminal can obtain the recommendation email. If the mailbox identifier of the recommending terminal and the mailbox identifier of the recommendation receiving terminal correspond to the same email server, the email server corresponding to the mailbox identifier of the recommending terminal does not need to forward the recommendation email, and the recommendation receiving terminal obtains the recommendation email directly.

In this embodiment, the mailbox identifier information of the recommendation recipient may include multiple standby mailbox identifiers of the recommendation recipient for improving availability. Accordingly, the email server setting information of the recommending terminal may include identifiers of the corresponding standby email servers. The recommending terminal may send the recommendation email simultaneously through the active email server and the standby email servers corresponding to the recommending terminal, and such servers may back up the forwarded recommendation email for each other.

In the process of the IPTV service in this embodiment, the recommending terminal may generate a recommendation email and send it to the terminal of the recommendation recipient (i.e. the recommendation receiving terminal) through the active email server and the standby email server corresponding to the recommending terminal to recommend the TV program. Therefore, the information sharing service is implemented without deploying any IM subsystem, and the cost is reduced.

FIG. 2 is a flowchart of a method for sharing information in an IPTV service system in another embodiment of the present invention. Compared with the foregoing embodiment, step 102 in this embodiment may include the following steps:
Step 1021: The recommending terminal generates a serial identifier, and binds the serial identifier to the recommendation email generated by the terminal.
Step 1022: The recommending terminal sends the recommendation email which carries the serial identifier. The serial identifier includes an IPTV service identifier of the terminal and a unique identifier string that belongs to the terminal.

In the system, the recommending terminal may send the recommendation email through a standby email server, and the recipient terminal may receive the email through multiple standby mailboxes for the purpose of backup. In order to prevent a recommendation email from being received repeatedly on the recommendation receiving terminal, the recommending terminal generates a serial identifier which is bound to the recommendation email. A serial identifier uniquely identifies a recommendation action.

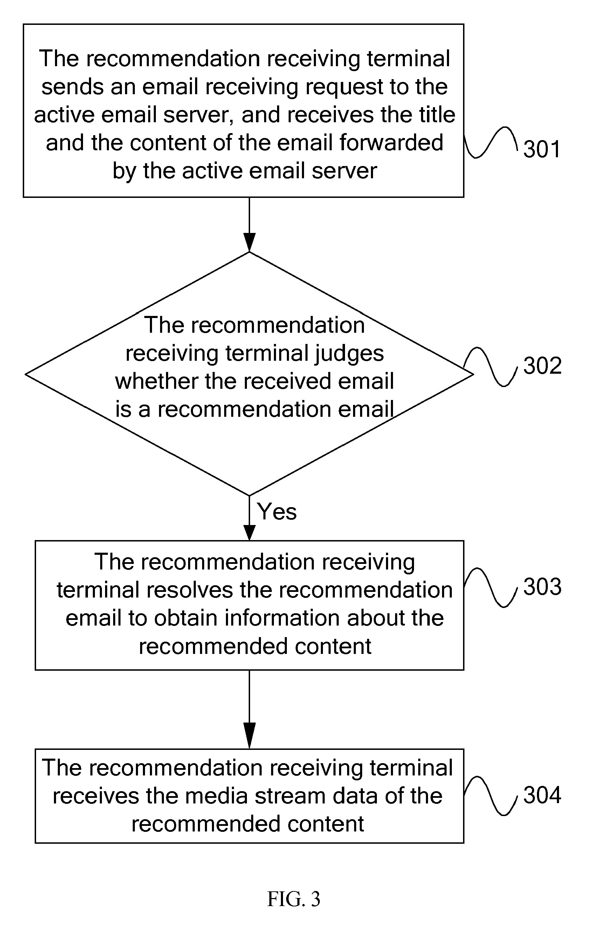

FIG. 3 is a flowchart of another method for sharing information in an IPTV service system in an embodiment of the present invention. The method in this embodiment includes the following steps:
Step 301: The recommendation receiving terminal sends an email receiving request to the active email server of the recommendation receiving terminal according to the preset recommendation receiving policy, and receives the title and the content of the email forwarded by the active email server.

The recommendation receiving policy may be triggered after an input recommendation receiving instruction, or triggered after a preset interval, with a view to sending an email receiving request.

The recommendation receiving policy may further include:
information about whether to delete the received email from the active email server immediately after receiving the email so that the email on the active email server is deleted immediately after the terminal receives the title and the content of the email; or
information about whether to delete the received email from the active email server at later time after receiving the email so that the email on the active email server is deleted at later time after the terminal receives the title and the content of the email.

Step 302: The recommendation receiving terminal judges whether the received email is a recommendation email, and performs step 303 if the received email is a recommendation email.

The recommendation receiving terminal may judge whether the received email is a recommendation email according to whether the title or the content of the email includes a recommendation identifier which identifies the email as a recommendation email.

Step 303: The recommendation receiving terminal resolves the recommendation email to obtain the information about the recommended content.

Step 304: The recommendation receiving terminal receives the media stream data of the recommended content so that the terminal user can watch the recommended TV program.

Further, in this embodiment, the recommendation receiving terminal may send an email receiving request to several standby email servers simultaneously, and receive the title and the content of the emails forwarded by the standby email servers simultaneously. The standby email servers may serve the purpose of backup of the recommendation email for each other, thus improving the availability.

In this embodiment, the recommendation receiving terminal may judge whether the received email is a recommendation email according to the title and the content of the emails received by the active email server and several standby email servers, and, if it is a recommendation email, resolve the recommendation email to obtain the information about recommended content. Therefore, the information sharing service is implemented without deploying any IM subsystem, and the cost is reduced.

This embodiment may include a step of setting a time interval.

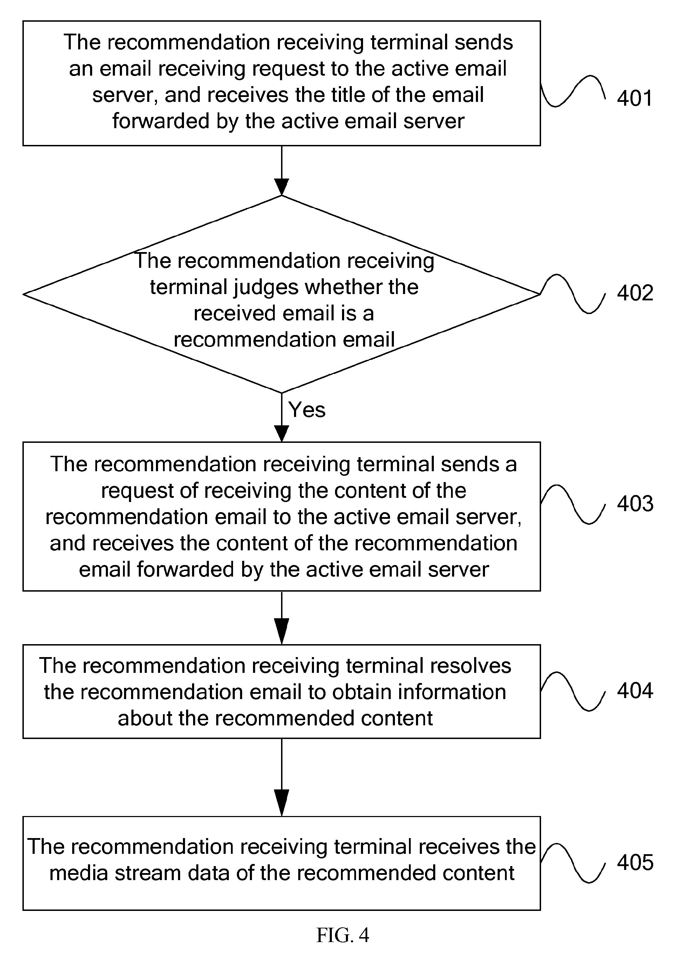

FIG. 4 is a flowchart of another method for sharing information in an IPTV service system in another embodiment of the present invention. The method in this embodiment includes the following steps:
Step 401: The recommendation receiving terminal sends an email title receiving request to the active email server of the recommendation receiving terminal according to the preset recommendation receiving policy, and receives the title of the email forwarded by the active email server.

The recommendation receiving policy may be triggered after an input recommendation receiving instruction, or triggered after a preset interval, with a view to sending an email receiving request.

The recommendation receiving policy may further include: information about whether to delete the received email from the active email server immediately after receiving the email so that the email on the active email server is deleted immediately after the terminal receives the title and the content of the email; or information about whether to delete the received email from the active email server at later time after receiving the email so that the email on the active email server is deleted at later time after the terminal receives the title and the content of the email.

Step 402: The recommendation receiving terminal judges whether the received email is a recommendation email, and performs step 403 if the received email is a recommendation email.

The recommendation receiving terminal may judge whether the received email is a recommendation email according to whether the title of the email includes a recommendation identifier.

Step 403: The recommendation receiving terminal sends a request of receiving the content of a recommendation email to the active email server of the recommendation receiving terminal, and receives the content of the recommendation email forwarded by the active email server.

Step 404: The recommendation receiving terminal resolves the recommendation email to obtain the information about the recommended content.

Step 405: The recommendation receiving terminal receives the media stream data of the recommended content so that the terminal user can watch the recommended TV program.

After step 403, the following operation may further occur: deleting the email from the active email server immediately or at later time.

Further, in this embodiment, the recommendation receiving terminal may send a request of receiving the title or content of an email to several standby email servers simultaneously, and receive the title or content of the emails forwarded by the standby email servers simultaneously. The standby email servers may serve the purpose of backup of the recommendation email for each other, thus improving the availability.

In this embodiment, the recommendation receiving terminal may judge whether the received email is a recommendation email according to the title of the emails received by the active email server and several standby email servers, and, if it is a recommendation email, go on to receive the content of the recommendation email, and resolve the recommendation email to obtain the information about recommended content. Therefore, no unrelated emails are received or shared, the user request is responded to more quickly, and the user experience is enhanced.

This embodiment may further include a step of setting a time interval.

In the system, the recommending terminal may send the recommendation email through a standby email server, and the recommendation receiving terminal may receive the email through multiple standby emails for the purpose of backup. In order to prevent a recommendation email from being received repeatedly on the recommendation receiving terminal, preprocess is required before the recommendation email is resolved. That is, in the foregoing two embodiments of another method for implementing an IPTV service, the following step may further occur before step 304 and step 404:

Preprocess is performed according to the serial identifier which uniquely identifies a recommendation action in the recommendation email. That is, the serial identifier carried in the recommendation email is identified. The recommendation emails with the same serial identifier are combined, and only one recommendation email of this serial identifier is retained so that the terminal can resolve the recommendation email.

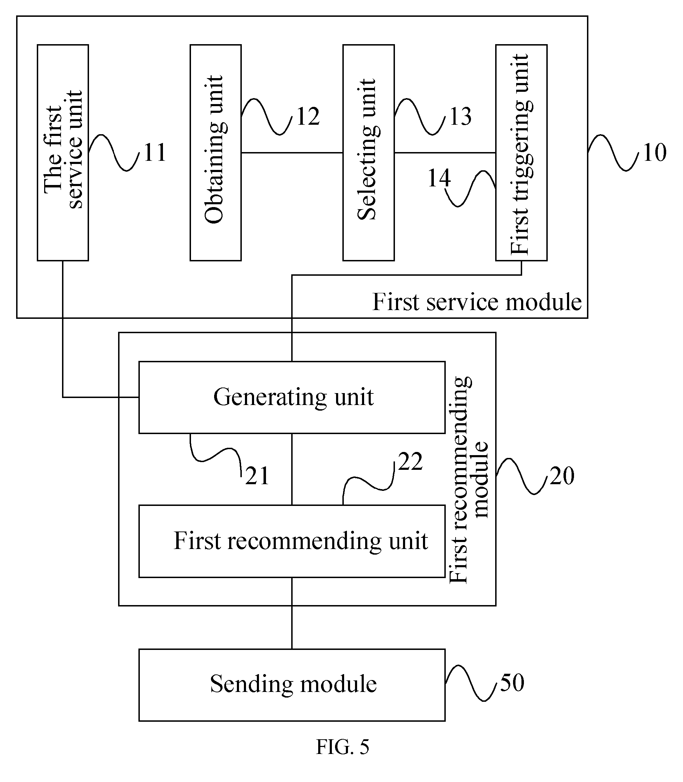

FIG. 5 is a structure of a terminal for sharing information in an IPTV service system in an embodiment of the present invention. The terminal in this embodiment includes a first recommending module 20 and a sending module 50 which are interconnected. The first recommending module 20 is adapted to: generate a recommendation email which recommends a TV program to the recommendation recipient. The recommendation email carries the mailbox identifier of the selected recommendation recipient and the index of the recommended contents, and may further carry description information about the recommended contents. The sending module 50 is adapted to send the recommendation email according to the mailbox identifier. The title and/or contents of the recommendation email include a recommendation identifier which identifies the email as a recommendation email so that the terminal of the recommendation recipient can identify the recommendation email.

Further, this embodiment may further include a first service module 10, which is connected with the first recommending module 20 and adapted to send a recommendation request carrying at least one identifier of recommendation recipient to the first recommending module 20 according to the preset recommendation generating policy. The recommendation generating policy for triggering the information sharing service may be: The user of the recommending terminal triggers the information sharing service, or the information sharing service is triggered automatically once the preset recommendation condition is fulfilled. The preset recommendation condition may be set for every recommendation recipient, or set for only a specific recommendation recipient. More particularly, a keyword is set according to the hobbies and occupation of the recommendation recipient. When the type or the name of the program received by the recommending terminal includes the keyword, a recommendation request is sent to trigger the information sharing service.

In this embodiment, the first recommending module stores and maintains a recommendation recipient information list all the time. This recommendation recipient information list includes the IPTV user identifier, name and description of the recommendation recipient. The recommending terminal also stores the mapping relation between the ID of the recommendation recipient and the mailbox identifier information. The mailbox identifier information includes an active mailbox identifier of the recommendation recipient. The active mailbox identifier of the recommendation recipient may be obtained through the ID of the recommendation recipient. An optimized email client program may be used as the first recommending module.

Further, the first service module 10 may include: a first service unit 11, an obtaining unit 12, a selecting unit 13, and a first triggering unit 14. The first service unit 11 is adapted to perform IPTV services. The obtaining unit 12 is adapted to obtain information about all recommendation recipients according to the preset recommendation generating policy. The information includes an identifier of the recommendation recipient and the recommendation recipient mailbox identifier information corresponding to the identifier. The mailbox identifier information may include an active mailbox identifier, and may also include an active mailbox identifier and several standby mailbox identifiers. The selecting unit 13 is connected with the obtaining unit 12 and adapted to select one or more identifiers of the recommendation recipient and the recommendation recipient mailbox identifier information from the information about all recommendation recipients obtained by the obtaining unit 12. The first triggering unit 14 is connected with the selecting unit 13 and adapted to initiate a recommendation request. The recommendation request carries identifiers of the recommendation recipients and the corresponding mailbox identifier information. The first recommending module 20 may include a generating unit 21 and a first recommending unit 22. The generating unit 21 is connected with the first service unit 11 and the first triggering unit 14, and is adapted to generate the recommendation email according to the video service on the first service unit 11 after receiving the recommendation request from the first triggering unit 14. The first recommending unit 22 is connected with the generating unit 21 and adapted to send the recommendation email generated by the generating unit 21.

When the first service module performs the IPTV service in this embodiment, the first recommending module may generate a recommendation email and send it to the recommendation receiving terminal through the active email server and the standby email server corresponding to the recommending terminal to recommend the TV program. Therefore, the information sharing service is implemented without deploying any IM subsystem, and the cost is reduced.

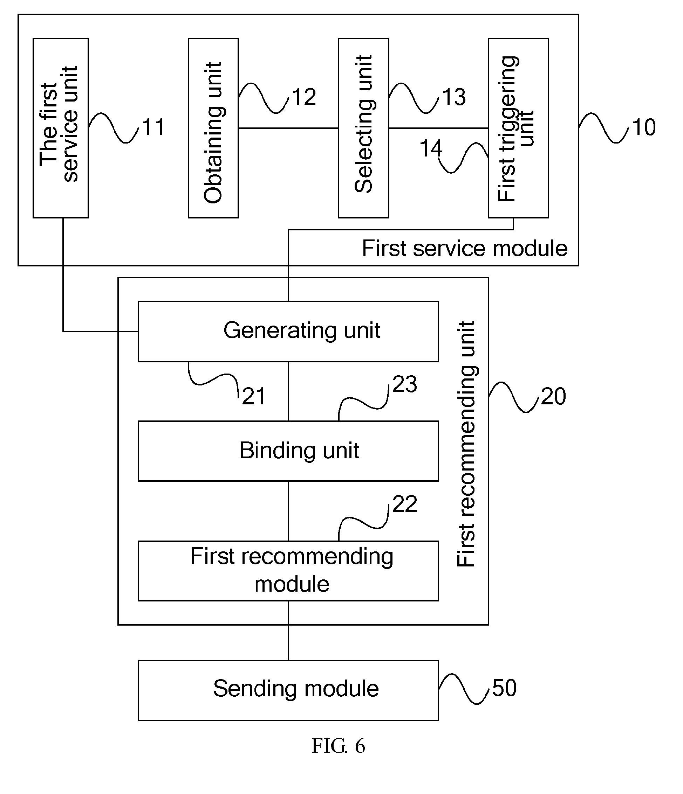

FIG. 6 is a structure of a terminal for sharing information in an IPTV service system in another embodiment of the present invention. As against the foregoing embodiment, the first recommending module 20 in this embodiment may further include a binding unit 23. The first recommending unit 22 is connected with the generating unit 21 through the binding unit 23. The binding unit 23 is adapted to: generate a serial identifier for identifying the recommendation email and bind the serial identifier to the recommendation email generated by the generating unit 21 so that the recommendation email carries the serial identifier for being sent by the first recommending unit 22.

This embodiment prevents one recommendation email from being received repeatedly on the recipient terminal.

Based on the foregoing embodiment of the terminal for sharing information in an IPTV system, a system for sharing information in an IPTV system is provided in an embodiment of the present invention. The system may include an IPTV subsystem and an email server. The terminal in this embodiment is adapted to perform IPTV services through the IPTV subsystem; and the email server is adapted to forward the recommendation email sent by the terminal.

In the system for sharing information in an IPTV system, an email server is deployed to forward recommendation emails. In order to improve the system availability, multiple standby email servers may be deployed for the purpose of backing up the forwarded recommendation email. In this way, the information sharing service is implemented without deploying any IM subsystem, and the cost is reduced.

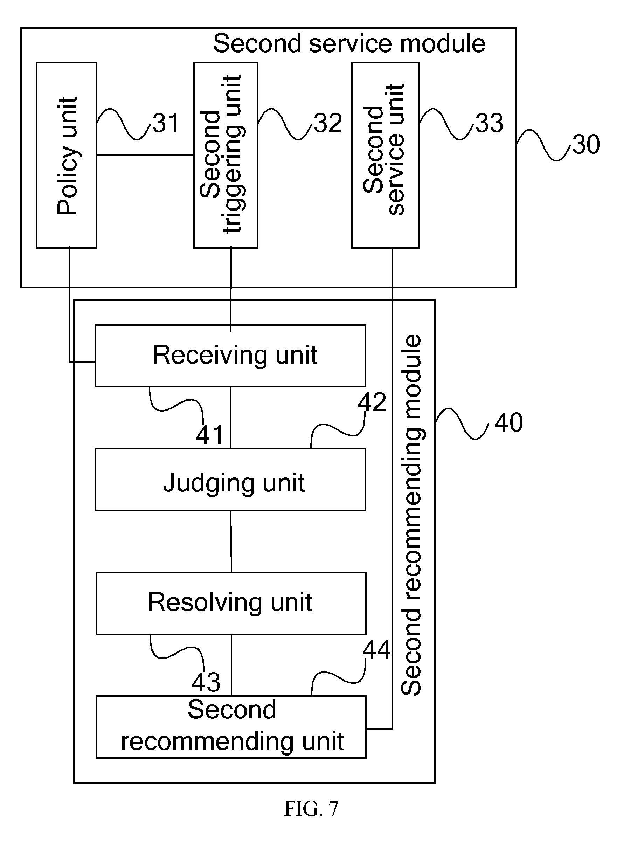

FIG. 7 is a structure of another terminal for sharing information in an IPTV service system in an embodiment of the present invention. The terminal in this embodiment includes a second service module 30 and a second recommending module 40 which are interconnected. The second service module 30 is adapted to: send an email receiving request according to a preset recommendation receiving policy, and obtain the media stream data of the recommended contents. The second recommending module 40 is adapted to: forward the email receiving request sent by the second service module 30, receive the email, and judge whether the received email is a recommendation email, and, if it is a recommendation email, resolve the recommendation email to obtain information about the recommended contents, and send the information about the recommended contents to the second service module.

Further, the second service module 30 may include: a policy unit 31, a second triggering unit 32, and a second service unit 33. The policy unit 31 is adapted to preset a recommendation receiving policy. The second triggering unit 32 is connected with the policy unit 31, and is adapted to send a receiving request to the second recommending module 40 according to the recommendation receiving policy preset by the policy unit 31. The recommendation receiving policy may be a receiving request that is sent automatically, or a receiving request sent as triggered by the terminal user. The receiving request carries the mailbox information of the corresponding recommendation recipient. The second service unit 33 is adapted to obtain the media stream data of the recommended content according to the information about the recommended content sent by the second recommending module 40. The second recommending module 40 may include a receiving unit 41, a judging unit 42, a resolving unit 43, and a second recommending unit 44, which are connected sequentially. The receiving unit 41 is connected with the second triggering unit 32 of the second service module 30, and is adapted to forward the email receiving request and receive emails. The judging unit 42 is adapted to judge whether the email received by the receiving unit 41 is a recommendation email. The resolving unit 43 is adapted to resolve the recommendation email to obtain the information about the recommended content if the judging unit 42 determines that the received email is a recommendation email. The second recommending unit 44 is connected with the second service unit 33 of the second service module 30, and is adapted to send the information about the recommended content to the second service module 30.

In this embodiment, the second recommending module may judge whether the received email is a recommendation email according to the title and/or the content of the emails received by the email server (either an active email server, or an active email server together with several standby email servers) corresponding to the mailbox identifier information, and, if the received email is a recommendation email, resolve the recommendation email to obtain the information about recommended content. Therefore, the information sharing service is implemented without deploying any IM subsystem, and the cost is reduced.

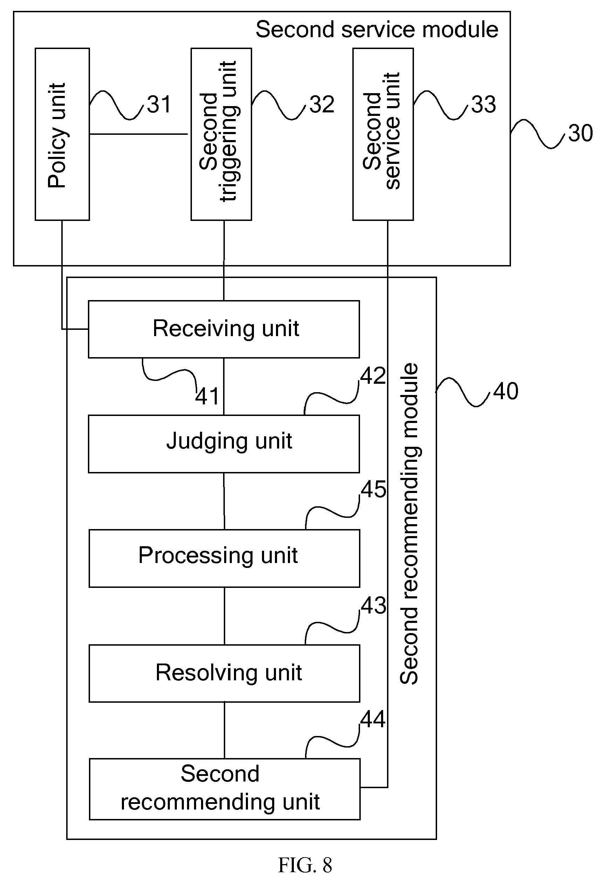

FIG. 8 is a structure of another terminal for sharing information in an IPTV service system in another embodiment of the present invention. As against the foregoing embodiment, the second recommending module 40 in this embodiment may further include a processing unit 45. The judging unit 42 is connected with the resolving unit 43 through the processing unit 45. The processing unit 45 is adapted to: perform preprocessing according to the serial identifier carried in the recommendation email if the judging unit 43 determines that the received email is a recommendation email, and combine the recommendation emails with the same serial identifier so that the resolving unit 43 can resolve the recommendation email to obtain the information about the recommended content.

This embodiment prevents one recommendation email from being received repeatedly on the recipient terminal.

Based on the foregoing embodiment of the terminal for sharing information in an IPTV system, another system for sharing information in an IPTV system is provided in an embodiment of the present invention. The system in this embodiment may further include an IPTV subsystem and an email server. The terminal in this embodiment is adapted to obtain the media stream data of the recommended content through the IPTV subsystem. The email server is adapted to forward the received email.

In another system for sharing information in an IPTV system, an email server is deployed to forward the received email. In order to improve the system availability, multiple standby email servers may be deployed for the purpose of backing up the forwarded email. In this way, the existing email servers are still usable, thus improving the availability of the information sharing service and reducing the cost.

It is understandable to those skilled in the art that all or part of the steps of the foregoing method embodiments may be implemented by hardware instructed by a program. The program may be stored in a computer-readable storage medium. When being executed, the program performs steps of the foregoing method embodiments. The storage medium may be any medium suitable for storing program codes, for example, Read Only Memory (ROM), Random Access Memory (RAM), magnetic disk, or compact disk.

Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for sharing information in an IPTV service system, comprising:
generating a recommendation email, wherein the recommendation email carries a mailbox identifier information of a recommendation recipient and an index of recommended contents; and
sending the recommendation email according to the mailbox identifier to a recommendation recipient.

2. The method of claim 1, wherein generating a recommendation email comprises:
generating the recommendation email according to a preset recommendation generating policy, wherein the preset recommendation generating policy comprises: generating the recommendation email when a recommendation generating instruction is received or
recommendation generating condition is met.

3. The method of claim 1, further comprising:
obtaining an identity (ID) of the recommendation recipient;
obtaining mailbox identifier information of the recommendation recipient according to the ID of the recommendation recipient.

4. The method of claim1, wherein the mailbox identifier information of the recommendation recipient comprises a plurality of mailbox identifiers of the recommendation recipient.

5. The method of claim1, wherein a recommendation identifier which identifies an email as a recommendation email is included in a title and/or contents of the recommendation email.

6. The method of claim 2, 3, 4 or 5 wherein before sending the recommendation email, the method further comprises:
generating a serial identifier for identifying the recommendation email;
wherein the serial identifier is carried in the recommendation email and is used to identify the recommendation email when the recommendation email is received.

7. A method for sharing information in an IPTV service system, comprising:
sending an email receiving request according to a preset recommendation receiving policy, and receiving an email;
judging whether the received email is a recommendation email, and, if the received email is a recommendation email, resolving the recommendation email to obtain information about the recommended contents; and
obtaining media stream data of the recommended contents according to the information about the recommended contents.

8. The method of claim 7, wherein sending an email receiving request according to a preset recommendation receiving policy comprises: sending an email receiving request after a preset time interval.

9. The method of claim 7, wherein judging whether the received email is a recommendation email comprises:
judging whether the received email is a recommendation email according to whether a title or content of the email includes a recommendation identifier which identifies an email as a recommendation email.

10. The method of claim 7, 8, or 9, wherein before resolving the recommendation email to obtain information about the recommended contents, the method further comprises:
preprocessing according to a serial identifier carried in the recommendation email; and
combining the recommendation emails with the same serial identifier.

11. A terminal for sharing information in an IPTV service system, comprising:
a first recommending module, adapted to: generate a recommendation email which carries a mailbox identifier of a selected recommendation recipient and an index of the recommended contents; and
a sending module, adapted to send the recommendation email according to the mailbox identifier.

12. The terminal of claim 11, further comprising: a first service module, adapted to send a recommendation request carrying at least one identifier of recommendation recipient to the first recommending module according to the preset recommendation generating policy, so as to trigger the first recommending module to generate the a recommendation email.

13. The terminal of claim 12, wherein the first service module further comprises:
a first service unit, adapted to perform IPTV services;
an obtaining unit, adapted to obtain information about all recommendation recipients according to the preset recommendation generating policy, the information includes an identifier of the recommendation recipient and the recommendation recipient mailbox identifier information corresponding to the identifier;
a selecting unit, adapted to select one or more identifiers of the recommendation recipient and the corresponding recommendation recipient mailbox identifier information; and
a first triggering unit, adapted to send a recommendation request carrying identifiers of the recommendation recipients and the corresponding mailbox identifier information selected by the selecting unit.

14. The terminal of claim 11, 12 or 13, wherein the first recommending module further comprises:
a generating unit, adapted to generate the recommendation email after receiving the recommendation request; and
a first recommending unit, adapted to send the recommendation email according to the mailbox identifier information.

15. The terminal of claim 14, wherein the first recommending module further comprises:
a binding unit, adapted to: generate a serial identifier for identifying the recommendation email and carry the serial identifier in the recommendation email to be sent by the first recommending unit.

16. A terminal for sharing information in an IPTV service system, comprising:
a second service module, adapted to: send an email receiving request according to a preset recommendation receiving policy, and obtain media stream data of recommended contents; and
a second recommending module, adapted to: forward the email receiving request, receive a email, and judge whether the received email is a recommendation email, and, if the received email is the recommendation email, resolve the recommendation email to obtain information about the recommended contents, and send the information about the recommended contents to the second service module;
wherein the second recommending module is adapted to obtain media stream data of recommended contents according to the information about the recommended contents.

17. The terminal of claim 16, wherein the second recommending module is further adapted to perform preprocessing according to a serial identifier carried in the recommendation email if the received email is a recommendation email, and combine the recommendation emails with the same serial identifier so that the second recommending module resolves the recommendation email to obtain the information about the recommended content.
